# EUROPÄISCHE PATENTSCHRIFT

(11) **EP 2 067 652 B1**
(45) Veröffentlichungstag und Bekanntmachung des Hinweises auf die Patenterteilung: **28.08.2013**
(21) Anmeldenummer: 08105573.3
(22) Anmeldetag: 15.10.2008
(51) Int. Cl.: B60N 2/06, B60N 2/44, F16H 25/24

(54) **Adapterelement sowie Verstellantrieb mit Adapterelement**
Adapter element and adjustment drive with adapter element
Elément d'adaptateur et mécanisme de réglage doté d'un élément d'adaptateur

(30) Priorität: 05.12.2007 DE 102007058523
(43) Veröffentlichungstag der Anmeldung: 10.06.2009
(73) Patentinhaber: ROBERT BOSCH GMBH, 70442 Stuttgart (DE)
(72) Erfinder: Oberle, Hans-Juergen, 76437 Rastatt (DE)

(56) Entgegenhaltungen:
- WO-A1-99/51456
- WO-A1-03/037674
- DE-C1- 10 003 305
- FR-A1- 2 749 053
- JP-A- 11 030 302
- US-B1- 6 293 723

## Beschreibung

### Stand der Technik

Verstellantriebe mit einer Gewindespindel existieren in zwei unterschiedlichen Ausführungen, nämlich in der Form eines Tauchspindelantriebs (erste Alternative) sowie in der Form eines Drehspindelantriebs (zweite Alternative). Bei einem Tauchspindelantrieb dreht sich ein Schneckenrad des Antriebsmotors über die Gewindespindel, woraus eine Linearbewegung der Gewindespindel relativ zu dem Schneckenrad resultiert. Bei Drehspindelantrieben sind das Schneckenrad des Antriebsmotors und die Gewindespindel fest miteinander verbunden. Auf der Gewindespindel sitzt eine Spindelmutter mit einem korrespondierenden Innengewinde, wobei die Spindelmutter bei drehender Gewindespindel eine Linearbewegung ausführt. Bei letztgenannten Drehspindelantrieben ist in der Regel die Geometrie der sich bewegenden Spindelmutter an die kundenseitige Schnittstelle angepasst, während bei Tauchspindelantrieben üblicherweise die kundenspezifische Schnittstelle des Adapterelementes am Gewindespindelende adaptiert ist.

Fahrzeugsitzverstellantriebe sind in der Regel großen Zug-und Druckkräften ausgesetzt, da sie meistens ohne zwischengeschaltetes Getriebe direkt in Fahrzeugsitzen platziert sind und in der Folge auch die bei einem Crash auftretenden Kräfte (Lasten) abstützen müssen. In der Folge müssen die Schnittstellen, d.h. die Adapterelemente, entsprechend stabil dimensioniert sein. Bei Drehspindelantrieben bildet die Spindelmutter mit ihrem Innengewinde einen Formschluss mit dem Außengewinde der Gewindespindel, so dass die Gewindelänge an die Erfordernisse hinsichtlich der abzustützenden Axialkräfte angepasst werden kann.

Die Erfindung betrifft ein Adapterelement zur Verwendung bei einem Tauchspindelantrieb nach dem Oberbegriff des Anspruchs 1, wie es aus der DE 100 03 305 C1 bekannt ist. Das bekannte Adapterelement ist dabei einteilig in Form eines Blechelements ausgebildet, das um einen Abschnitt der Gewindespindel umgelegt und mit diesem verpresst bzw. verstemmt wird, so dass eine Formschlussverbindung ausgebildet wird.

Bei einem aus der JP 11 030302 A bekannten Antrieb nach dem Oberbegriff des Anspruchs 1 ist das Adapterelement mit einem elektromagnetischen Antrieb gekoppelt, der innerhalb eines das Innengewindeelement aufnehmenden Gehäuses angeordnet ist

In der Praxis sind unterschiedliche Ausführungsformen von Adapterelementen bekannt. So sind Adapterelemente mit einem Innengewindesackloch bekannt, mit dem das Adapterelement auf ein Außengewinde eines endseitigen, durchmesserreduzierten Bolzens der Gewindespindel aufgeschraubt wird. Ferner sind Adapterelemente bekannt, bei denen das Adapterelement durch Kaltumformen des Gewindespindelendes hergestellt wird, wodurch das Adapterelement in der Folge einstückig mit der Gewindespindel ausgebildet ist. Nachteilig hierbei ist, dass nur eine begrenzte Menge Material zur Ausbildung des Adapterelementes zur Verfügung steht und der Umformgrad nicht beliebig groß ist. Nachteilig bei sämtlichen bekannten Adapterelementen ist die teilweise aufwendige Herstellung und das vergleichsweise hohe Gewicht. Weiterhin sind aus der US 6 293 723 B1, der FR 2 749 053 A1, der WO 03/037674 A1 und der WO 99/51456 A1 Drehspindelantriebe mit auf der Drehspindel axial beweglich angeordneten, mutterartigen Elementen bekannt, die wiederum mittel- oder unmittelbar mit einem zu verstellenden Element, beispielsweise eine Fahrzeugsitz, verbunden sind.

### Offenbarung der Erfindung

Ausgehend von einem Adapterelement nach dem Oberbegriff des Anspruchs 1 entsprechend der DE 100 03 305 C1 liegt der Erfindung die Aufgabe zugrunde, ein Adapterelement für einen Tauchspindelantrieb derart weiterzubilden, dass dieses auf einfache Weise gewichtsreduziert ausgebildet werden kann. Ferner soll das Adapterelement konstruktiv einfach aufgebaut sein und eine Spielfreiheit nach der Montage aufweisen. Ferner besteht die Aufgabe darin, einen entsprechend optimierten Verstellantrieb, insbesondere einen Fahrzeugsitzverstellantrieb, vorzuschlagen. Diese Aufgabe wird hinsichtlich des Adapterelementes mit den Merkmalen des Anspruchs 1 und hinsichtlich des Verstellantriebes mit den Merkmalen des Anspruchs 7 gelöst.

Vorteilhafte Weiterbildungen der Erfindung sind in den Unteransprüchen angegeben.

Der Erfindung liegt unter anderem der Gedanke zugrunde, das Adapterelement nicht einteilig auszubilden, sondern mehrteilig herzustellen. Auf diese Weise ist es möglich, bei Bedarf, eines der Bauteile des Adapterelementes aus einem gewichtsreduzierten Material beispielsweise aus Kunststoff, um somit das Gesamtgewicht des Adapterelementes auf überraschend einfache Weise zu minimieren. Ein nach dem Konzept der Erfindung ausgebildetes Adapterelement umfasst mindestens ein Innengewindeelement, dessen Innengewinde mit dem Außengewinde der Gewindespindel korrespondiert, so dass das Innengewindeelement durch Verschrauben mit dem Außengewinde der Gewindespindel formschlüssig an der Gewindespindel festlegbar ist. Damit auf das Adapterelement von der Gewindespindel wirkende axiale Zug- und Druckkräfte (und umgekehrt) weitergegeben, d.h. abgestützt werden können, umfasst ein nach dem Konzept der Erfindung ausgebildetes Adapterelement zusätzlich zu dem Innengewindeelement ein Sicherangselement und ein Hülsenelement, das das Innengewindeelement, zumindest abschnittsweise, vorzugsweise vollständig, aufnimmt, wobei das Hülsenelement derart ausgebildet, d.h. ausgeformt und angeordnet ist, dass es in beide Axialrichtungen Kräfte von dem Innengewinde element abstützen kann, insbesondere diese Kräfte an eine kundenspezifische Adaption, insbesondere an einen Fahrzeugsitz, weitergeben kann. Selbstverständlich können bei dem vorgeschlagenen Adapterelement auch auf das Hülsenelement, beispielsweise von einer kundenspezifischen Adaption wirkende axiale Zug- und Druckkräfte an dem Innengewindeelement abgestützt werden. Ein nach dem Konzept der Erfindung ausgebildetes Adapterelement, das aus mehreren Bauteilen montiert ist, kann auf einfache Weise an bestimmte Adaptionen angepasst werden und ist somit flexibel einsetzbar. Durch eine Variation der Axialerstreckung des Innengewindeelementes kann die Gewindeüberdeckung an die Anforderungen hinsichtlich der Festigkeit der Verbindung auf einfache Weise angepasst werden. Bei dem Außengewinde, das mit dem Innengewindeelement in Eingriff ist, handelt es sich bevorzugt um ein zusätzlich mit einer Spindelmutter zusammenwirkendes Außengewinde.

In Weiterbildung der Erfindung ist mit Vorteil vorgesehen, dass das Innengewindeelement an einer von dem Gewindespindelende abgewandten Stirnseite, zumindest abschnittsweise, von einem sich in radialer Richtung und vorzugsweise auch in Umfangsrichtung erstreckenden Bodenabschnitt des Hülsenelementes umgriffen ist. Der Bodenabschnitt oder die Bodenabschnitte bilden dabei eine Anschlagfläche zum insbesondere unmittelbaren axialen Abstützen des Innengewindeelementes. Auf diese Weise können auf das Innengewindeelement wirkende Zugkräfte auf einfache Weise an dem Hülsenelement und auf das Hülsenelement wirkende Zugkräfte an dem Innengewindeelement abgestützt werden.

Von besonderem Vorteil ist eine Ausführungsform des Adapterelementes, bei der das Sicherungselement nicht nur an der Stirnseite der Gewindespindel anliegt, sondern bei der das Sicherungselement an der Gewindespindel festgelegt ist. Hierdurch wird eine besonders spielfreie Ausführung des Adapterelementes realisiert. Besonders bevorzugt ist eine Ausführung, bei der sich das Sicherungselement an der Fixierung in axialer Richtung abstützt.

Insbesondere herstellungstechnisch ist es von Vorteil, wenn das Sicherungselement mit einem Bolzen und/oder Niet an der Gewindespindel festgelegt ist, wobei der Bolzen das Sicherungselement in axialer Richtung durchsetzt und endseitig so breit ausgebildet ist, dass das Sicherungselement in axialer Richtung nicht von dem Bolzen abgezogen werden kann. Dabei ist eine Ausführungsform des Adapterelementes realisierbar, bei der der Bolzen, beispielsweise durch Verschweißen, an der Gewindespindel festgelegt ist. Besonders bevorzugt ist jedoch eine Ausführungsform, bei der der Bolzen einteilig mit der Gewindespindel ausgebildet und beispielsweise durch ein spanendes Verfahren hergestellt ist. Die Verbreiterung des Endabschnittes des Bolzens zur Sicherung des Sicherungselementes erfolgt bevorzugt durch Vertaumeln mit einem Vertaumelwerkzeug.

In Weiterbildung der Erfindung ist mit Vorteil vorgesehen, dass das Adapterelement Befestigungsmittel aufweist, die ein Festlegen einer kundenspezifischen Adaption ermöglichen. Beispielsweise kann an den Befestigungsmitteln ein Fahrzeugsitz oder ein Fahrzeugsitzteil festgelegt werden. Besonders bevorzugt ist eine Ausführungsform, bei der die Befestigungsmittel als eine das Hülsenelement in Querrichtung durchsetzende Durchgangsöffnung ausgebildet sind oder bei der die Befestigungsmittel eine solche Durchgangsöffnung umfassen, wobei durch die Durchgangsöffnung zum Festlegen einer kundenspezifischen Adaption ein Bolzen oder eine Gewindeschraube geführt werden kann.

Die Erfindung führt auch auf einen Verstellantrieb, insbesondere einen Fahrzeugsitzverstellantrieb, umfassend einen mit dem Außengewinde einer Gewindespindel zusammenwirkenden Antrieb sowie mindestens ein an einem Ende der Gewindespindel festgelegtes, nach dem Konzept der Erfindung ausgebildetes Adapterelement. Der Verstellantrieb ist nach dem Tauchspindelantriebprinzip ausgeführt, d.h. dass der Antrieb derart angeordnet ist, dass er unmittelbar, oder mittelbar über ein Getriebe, derart verstellend auf das Außengewinde der Gewindespindel einwirkt, dass sich die Gewindespindel relativ zu dem Antrieb linear verstellt und in der Folge eine kundenspezifische Adaption, insbesondere ein Fahrzeugsitzteil, beispielsweise unmittelbar oder mittelbar über ein Verstellgestänge bewegt wird.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine Längsschnittansicht einer Gewindespindel eines Verstellantriebs mit einem endseitig an der Gewindespindel festgelegten, mehrteilig ausgebildeten Adapterelement und
- Fig. 2: eine um 90° gegenüber Fig. 1 gedrehte Außenansicht der Gewindespindel mit Adapterelement.

### Ausführungsform der Erfindung

In den Figuren sind gleiche Bauteile und Bauteile mit der gleichen Funktion mit den gleichen Bezugszeichen gekennzeichnet.

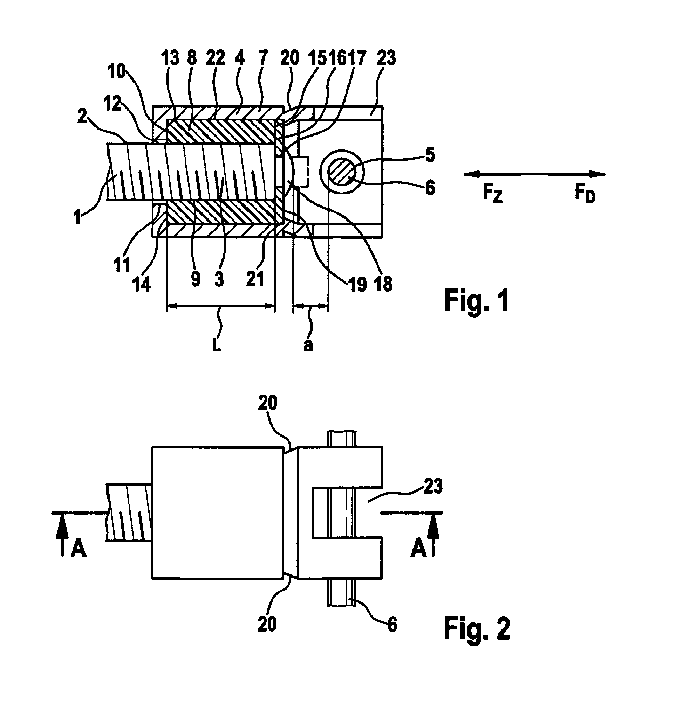

In den Fig. 1 und 2 ist ein Ausschnitt eines Verstellantriebes, hier eines Fahrzeugsitzverstellantriebes gezeigt. Dieser umfasst eine Gewindespindel 1 mit einem Außengewinde 2. Das Außengewinde 2 ist dabei als durchgängiges Gewinde ausgebildet, das sich zwischen den axialen Spindelebenen erstreckt. Mit der Gewindespindel 1 ist ein nicht gezeigtes Schneckenrad eines ebenfalls nicht gezeigten, ortsfesten, elektrischen Antriebs in Eingriff. Durch Rotation des Schneckenrades wird die Gewindespindel 1 linear relativ zu dem Antrieb verstellt (Tauchspindelantrieb).

An einem Endbereich 3 der Gewindespindel 1 ist ein Adapterelement 4 angeordnet, welches als Durchgangsloch ausgebildete Befestigungsmittel 5 zum Festlegen einer nicht gezeigten, kundenspezifischen Adaption aufweist. Zum formschlüssigen Verbinden des Adapterelementes 4 mit der kundenspezifischen Adaption ist ein die Befestigungsmittel 5 durchsetzender Bolzen 6 vorgesehen, der sich quer zur Längserstreckung der Gewindespindel 1 erstreckt. Die als Durchgangsloch ausgebildeten Befestigungsmittel 5 befinden sich mit Axialabstand zu der Gewindespindel 1 in einem metallischen Hülsenelement 7 des mehrteilig ausgebildeten Adapterelementes 4.

Wie sich insbesondere aus Fig. 1 ergibt, umschließt das Hülsenelement 7 ein Innengewindeelement 8 aus Kunststoff, welches ein Innengewinde 9 aufweist, das mit dem Außengewinde 2 der Gewindespindel 1 in Eingriff ist. Das Innengewindeelement 8 ist im Endbereich 3 auf das Außengewinde 2 der Gewindespindel 1 aufgeschraubt. Über die Länge 1 des Innengewindeelementes 8 kann das Innengewinde hinsichtlich Festigkeitsanforderungen angepasst werden. Radial außen wird das Innengewindeelement 8 von einem kreiszylindrischen Axialabschnitt 22, der unmittelbar an dem Innengewindeelement 8 anliegt, umgeben.

Wie unschwer aus Fig. 1 zu erkennen ist, werden auf das Innengewindeelement 8 von der Gewindespindel 1 ausgeübte, axiale Zugkräfte F_{Z} sowie axiale Druckkräfte F_{D} an dem Hülsenelement 7 abgestützt. Ebenso werden, insbesondere im Fall eines Fahrzeug-Crashes, von der kundenspezifischen Adaption auf das Hülsenelement 7 wirkende Zug- oder Druckkräfte von dem Hülsenelement 7 an dem Innengewindeelement 8 abgestützt.

Damit die von dem Innengewindeelement 8 auf dieses von der Gewindespindel 1 wirkende Zugkräfte F_{Z} an dem Hülsenelement 7, bzw. damit die auf das Hülsenelement 7 wirkende Zugkräfte F_{Z} an dem Innengewindeelement 8 abgestützt werden können, wird eine Stirnseite 10 des zylindrischen Innengewindeelementes 8 von einem sich in radialer Richtung erstreckenden Bodenabschnitt 11 des im Wesentlichen zylindrischen Hülsenelementes 7 abschnittsweise radial umgriffen. Dabei wird eine zentrale Öffnung 12 im Bodenabschnitt 11 des Hülsenelementes 7 in axialer Richtung von der Gewindespindel 1 durchsetzt. Bei der von dem Bodenabschnitt 11 umgriffenen Stirnseite 10 handelt es sich um die von den Befestigungsmitteln 5 abgewandte Stirnseite des Innengewindeelementes 8. Durch das Vorsehen des Bodenabschnittes 11 wird eine kreisringförmige Anschlagfläche 13 gebildet, die mit einer entsprechenden, kreisringförmigen Kontaktfläche 14 an der Stirnseite 10 des Innengewindeelementes 8 zusammenwirkt (bzw. an dieser anliegt).

An der von der Stirnseite 10 abgewandten Stirnseite 15 des Innengewindeelementes 8 liegt das Innengewindeelement 8 an einem kreisringförmigen, plättchenartigen Sicherungselement 16 aus Metall an. Dieses weist eine zentrische Öffnung 17 auf, die von einem Bolzen 18 durchsetzt ist, der im Bereich seines freien Endes durch Vertaumeln verdickt ausgebildet ist und so die Öffnung 17 in radialer Richtung überragt, so dass das Sicherungselement 16 an der Gewindespindel 1 gegen Axialverschieben gesichert ist. Der Bolzen 18 ist dabei einstückig mit der Gewindespindel 1 ausgebildet und weist zumindest im Bereich der Öffnung 17 einen geringeren Durchmesser als die Gewindespindel 1 auf. In der Fig. 1 ist der Bolzen 18 strichliert im noch nicht vertaumelten Zustand gezeigt.

In einem äußeren Randbereich stützt sich das Sicherungselement 16 mit einer von dem Innengewindeelement 8 abgewandten Stirnseite 19 an radial nach innen gerichteten Verstemmungen 20 des Hülsenelementes 7 ab, so dass auf das Innengewindeelement 8 von der Gewindespindel 1 wirkende Druckkräfte über das Sicherungselement 16 an den gleichmäßig in Umfangsrichtung beabstandeten Verstemmungen 20 des Hülsenelementes 7 abgestützt werden. Ebenso werden über die Verstemmungen 20 und das Sicherungselement 16 von der kundenspezifischen Adaption über die Befestigungsmittel 5 auf das Hülsenelement 7 übertragene Druckkräfte an dem Innengewindeelement 8 abgestützt. Im Bereich ihrer freien Enden bilden die Verstemmungen 20 der Anschlagfläche 13 gegenüberliegende Anschlagflächen 21. Sollten im Falle eines Fahrzeug-Crashes die Verstemmungen 20 den wirkenden Kräften nicht standhalten können, wird ein mit a bezeichneter Abstand zwischen dem freien Ende des Bolzens 18 und den Befestigungsmitteln 5 bzw. dem Bolzen 6 überbrückt, so dass sich in der Folge die kundenspezifische Adaption über den Bolzen 6 unmittelbar stirnseitig am Bolzen 18 abstützt. Da der Abstand a sehr gering ist, ist auch der maximale Hub, den das Gesamtsystem bei hohen Kraftbelastungen maximal vollführen kann, gering.

Bei der Montage des Adapterelementes 4 wird bevorzugt wie folgt vorgegangen. Zunächst wird das Hülsenelement 7 auf die Gewindespindel 1 aufgeschoben. Daraufhin wird das Innengewindeelement 8 mit der Gewindespindel 1 verschraubt, so dass die in der Zeichnungsebene rechts liegende Stirnseite 15 des Innengewindeelementes 8 in radialer Stirnseite der Gewindespindel 1 fluchtet. Daraufhin wird das Sicherungselement 16 auf den zu diesen Zeitpunkt strichliert dargestellt zylindrisch ausgeformten Bolzen 18 aufgeschoben, woraufhin das freie Ende des Bolzens 18 vertaumelt wird, so dass es die Öffnung 17 im Sicherungselement 16 in radialer Richtung überragt. Daraufhin werden mittels eines Stempelwerkzeugs in radialer Richtung nach innen orientierte Verstemmungen 20 in das Hülsenelement 7 eingebracht, wodurch das Innengewindeelement 8 spielfrei und formschlüssig innerhalb des Hülsenelementes 7 gehalten wird.

Wie aus Fig. 2 ersichtlich ist, ist das Hülsenelement 7 im Bereich der Befestigungsmittel 5 nicht umfangsgeschlossen ausgebildet, sondern weist einen in radialer Richtung durchgehenden Ausschnitt 23 auf. Ferner ist in Fig. 2 die Schnittlinie A - A gezeigt, entlang der der Verstellantrieb gemäß Fig. 1 geschnitten ist.

## Patentansprüche

1. Adapterelement (4) welches an einem Endbereich (3) einer ein Außengewinde (2) aufweisenden Gewindespindel (1) eines Tauchspindelantriebs festlegbar ist,
**dadurch gekennzeichnet,**
**dass** das Adapterelement (4) mehrteilig ausgebildet ist und ein mit dem Außengewinde (2) der Gewindespindel (1) verschraubbares Innengewindeelement (8) und ein das Innengewindeelement (8) aufnehmendes Hülsenelement (7) aufweist, das derart ausgebildet und angeordnet ist, dass an ihm auf das Innengewindeelement (8) wirkende axiale Zug- und Druckkräfte (F_{Z}, F_{D}) abstützbar sind, dass das Innengewindeelement (8) formschlüssig innerhalb des Hülsenelementes (7) aufgenommen ist, dass an der Stirnseite (15) der Gewindespindel (1) ein stirnseitig an dem Innengewindeelement (8) anliegendes, insbesondere scheibenförmiges, Sicherungselement (16) zum Sichern des Innengewindeelementes (8) gegen ein Herausdrehen festlegbar ist, wobei das Sicherungselement (16) Teil des Adapterelements (4) ist), und dass das Sicherungselement (16) axial an einer Anschlagfläche (21) einer radial nach innen gerichteten Verstemmung (20), vorzugsweise an mehreren in Umfangsrichtung beabstandeten Verstemmungen (20), des Hülsenelementes (7) abstützend angeordnet ist, wobei sich das Innengewindeelement (8) mittelbar über das Sicherungselement (16) an der Anschlagfläche (21) des Hülsenelementes abstützt.

2. Adapterelement nach Anspruch 1, **dadurch gekennzeichnet, dass** das Innengewindeelement (8) aus Kunststoff, insbesondere als Spritzgussteil, und das Hülsenelement (7) aus Metall ausgebildet ist,

3. Adapterelement nach nach einem der vorhergehenden Ansprüchen,
**dadurch gekennzeichnet,**
**dass** das Innengewindeelement (8) an der von dem Ende der Gewindespindel (1), an dem das Adapterelement (4) angeordnet ist, abgewandten Stirnseite (10) von einem sich radial in Richtung der Gewindespindel (1) erstreckenden, von der Gewindespindel (1) durchsetzten, Bodenabschnitt (11) des Hülsenelementes (7) umgriffen ist.

4. Adapterelement nach Anspruch 1,
**dadurch gekennzeichnet,**
**dass** das Sicherungselement (16) eine zentrische Öffnung (17) aufweist, die von einem einstückig mit der Gewindespindel (1) ausgebildeten oder an dieser festgelegten axialen Bolzen (18) durchsetzt ist, der die Öffnung (17) auf der der Gewindespindel (1) abgewandten Stirnseite (15) des Sicherungselementes (16) in radialer Richtung überragt.

5. Adapterelement nach Anspruch 4,
**dadurch gekennzeichnet,**
**dass** das freie Ende des Bolzens (18) durch Vertaumeln verbreitert ist.

6. Adapterelement nach einem der vorhergehenden Ansprüche,
**dadurch gekennzeichnet,**
**dass** das Adapterelement (4), insbesondere als quer zur Längserstreckung der Gewindespindel (1) verlaufende Durchgangsöffnung ausgebildete, Befestigungsmittel (5) zum Festlegen einer kundenspezifischen Adaption aufweist.

7. Verstellantrieb, insbesondere Fahrzeugsitzverstellantrieb, umfassend einen mit dem Außengewinde (2) der Gewindespindel (1) zusammenwirkenden Antrieb sowie mindestens ein an einem Endbereich (3) der Gewindespindel (1) festgelegtes Adapterelement (4) nach einem der vorhergehenden Ansprüche.

## Claims

1. Adapter element (4) which can be fixed at an end region (3) of a threaded spindle (1) of a plunger spindle drive, which threaded spindle (1) has an external thread (2), **characterized in that** the adapter element (4) is of multiple-part configuration and has an internal thread element (8), which can be screwed to the external thread (2) of the threaded spindle (1), and a sleeve element (7) which receives the internal thread element (8) and is configured and arranged in such a way that axial tensile and compressive forces (F_{Z}, F_{D}) which act on the internal thread element (8) can be supported on it, **in that** the internal thread element (8) is received within the sleeve element (7) in a positively locking manner, **in that** an, in particular disc-shaped, securing element (16) which bears against the end side of the internal thread element (8) can be fixed on the end side (15) of the threaded spindle (1) in order to secure the internal thread element (8) against being screwed out, the securing element (16) being part of the adapter element (4), and **in that** the securing element (16) is arranged so as to support axially on a stop face (21) of at least one radially inwardly directed caulked portion (20), preferably on a plurality of caulked portions (20) which are spaced apart in the circumferential direction, of the sleeve element (7), the internal thread element (8) being supported indirectly via the securing element (16) on the stop face (21) of the sleeve element.

2. Adapter element according to Claim 1, **characterized in that** the internal thread element (8) is configured from plastic, in particular as an injection-moulded part, and the sleeve element (7) is configured from metal.

3. Adapter element according to one of the preceding claims, **characterized in that**, at the end side (10) which faces away from the end of the threaded spindle (1), at which end the adapter element (4) is arranged, the internal thread element (8) is engaged around by a bottom section (11) of the sleeve element (7), which bottom section (11) extends radially in the direction of the threaded spindle (1) and is penetrated by the threaded spindle (1).

4. Adapter element according to Claim 1, **characterized in that** the securing element (16) has a central opening (17) which is penetrated by an axial pin (18) which is configured in one piece with the threaded spindle (1) or is fixed on the latter and protrudes beyond the opening (17) in the radial direction on that end side (15) of the securing element (16) which faces away from the threaded spindle (1).

5. Adapter element according to Claim 4, **characterized in that** the free end of the pin (18) is widened by tumbling.

6. Adapter element according to one of the preceding claims, **characterized in that** the adapter element (4) has fastening means (5) which are configured, in particular, as a through opening which runs transversely with respect to the longitudinal extent of the threaded spindle (1), for fixing a client-specific adaptation.

7. Adjusting drive, in particular vehicle-seat adjusting drive, comprising a drive which interacts with the external thread (2) of the threaded spindle (1), and at least one adapter element (4) according to one of the preceding claims which is fixed at an end region (3) of the threaded spindle (1).

## Revendications

1. Elément d'adaptateur (4) qui peut être fixé à une région d'extrémité (3) d'une broche filetée (1) d'un entraînement à broche plongeante présentant un filetage externe (2),
**caractérisé en ce que**
l'élément d'adaptateur (4) est réalisé en plusieurs parties et présente un élément de filetage interne (8) pouvant être vissé au filetage externe (2) de la broche filetée (1), et un élément de douille (7) recevant l'élément de filetage interne (8), lequel élément de douille est réalisé et disposé de telle sorte qu'il puisse supporter des forces de traction et de pression (F_{Z}, F_{D}) axiales agissant sur l'élément de filetage interne (8), **en ce que** l'élément de filetage interne (8) est reçu par engagement par correspondance géométrique à l'intérieur de l'élément de douille (7) , **en ce qu'**au niveau du côté frontal (15) de la broche filetée (1) peut être fixé un élément de fixation (16) s'appliquant du côté frontal contre l'élément de filetage interne (8), en particulier en forme de disque, pour sécuriser l'élément de filetage interne (8) contre tout dévissage, l'élément de fixation (16) faisant partie de l'élément d'adaptateur (4), et **en ce que** l'élément de fixation (16) est disposé en assurant un support axialement au niveau d'une surface de butée (21) d'au moins un rabattement (20) orienté radialement vers l'intérieur, de préférence au niveau de plusieurs rabattements (20) espacés dans la direction périphérique, de l'élément de douille (7), l'élément de filetage interne (8) s'appuyant de manière indirecte par le biais de l'élément de fixation (16) contre la surface de butée (21) de l'élément de douille.

2. Elément d'adaptateur selon la revendication 1, **caractérisé en ce que** l'élément de filetage interne (8) est réalisé en plastique, en particulier sous forme de pièce moulée par injection, et l'élément de douille (7) est réalisé en métal.

3. Elément d'adaptateur selon l'une quelconque des revendications précédentes,
**caractérisé en ce que**
l'élément de filetage interne (8) est saisi par son pourtour, au niveau du, côté frontal (10) opposé à l'extrémité de la broche filetée (1) sur laquelle est disposé l'élément d'adaptateur (4), par une portion de fond (11) de l'élément de douille (7) s'étendant radialement dans la direction de la broche filetée (1) et traversée par la broche filetée (1).

4. Elément d'adaptateur selon la revendication 1,
**caractérisé en ce que**
l'élément de fixation (16) présente une ouverture centrale (17) qui est traversée par un boulon axial (18) réalisé d'une seule pièce avec la broche filetée (1) ou fixé sur celle-ci, lequel boulon dépasse dans la direction radiale de l'ouverture (17) du côté frontal (15) de l'élément de fixation (16) opposé à la broche filetée (1).

5. Elément d'adaptateur selon la revendication 4,
**caractérisé en ce que**
l'extrémité libre du boulon (18) est élargie par nutation.

6. Elément d'adaptateur selon l'une quelconque des revendications précédentes,
**caractérisé en ce que**
l'élément d'adaptateur (4), présente, en particulier en tant que ouverture de passage s'étendant transversalement à l'étendue longitudinale de la broche filetée (1), des moyens de fixation (5) réalisés pour réaliser une adaptation spécifique au client.

7. Entraînement de commande, en particulier entraînement de commande d'un siège de véhicule, comprenant un entraînement coopérant avec le filetage externe (2) de la broche filetée (1), ainsi qu'au moins un élément d'adaptateur (4) fixé sur une région d'extrémité (3) de la broche filetée (1) selon l'une quelconque des revendications précédentes.
